# EUROPÄISCHE PATENTANMELDUNG

(11) **EP 2 669 534 A2**
(43) Veröffentlichungstag der Anmeldung: **04.12.2013**
(21) Anmeldenummer: 13168511.7
(22) Anmeldetag: 21.05.2013
(51) Int. Cl.: F16B 21/02, F16B 7/18, F16B 37/04

(54) **Montageanordnung**

(30) Priorität: 01.06.2012 DE 102012209267
(71) Anmelder: HILTI Aktiengesellschaft, 9494 Schaan (LI)
(72) Erfinder: Kemple, Lorcan, 6971 Hard (AT)

(57) **Zusammenfassung**

Die Erfindung betrifft eine Montageanordnung bestehend aus einer Profilschiene mit einem Längsschlitz, welcher von zwei parallel verlaufenden Innenstegen der Profilschiene begrenzt wird, und aus einem Befestigungsteil zum Befestigen eines Anbauteils an der Profilschiene, wobei das Befestigungsteil aufweist: einen Nutenstein, der im Inneren der Profilschiene angeordnet ist, und der die Innenstege der Profilschiene hintergreift, einen Klemmkörper, der mit dem Nutenstein verbunden ist, und der von aussen gegen die Profilschiene wirkt, und eine Federeinrichtung, welche durch eine Bewegung des Klemmkörpers vom Nutenstein hinweg spannbar ist. Erfindungsgemäss ist vorgesehen, dass der Klemmkörper relativ zum Nutenstein und relativ zur Profilschiene um eine durch den Längsschlitz hindurch verlaufende Drehachse aus einer Verschiebewinkellage in eine Vormontagewinkellage verdrehbar ist, und dass das Befestigungsteil zumindest eine Betätigungsschrägfläche aufweist, welche den Klemmkörper von der Profilschiene wegdrückt und welche die Federeinrichtung, unter Erhöhung des Anpressdrucks des Nutensteins an die Innenstege, spannt, wenn der Klemmkörper relativ zur Profilschiene aus der Verschiebewinkellage in die Vormontagewinkellage verdreht wird.

## Beschreibung

Die Erfindung betrifft eine Montageanordnung gemäss dem Oberbegriff des Anspruchs 1. Eine solche Montageanordnung besteht aus einer Profilschiene mit einem Längsschlitz, welcher von zwei parallel verlaufenden Innenstegen der Profilschiene begrenzt wird, und aus einem Befestigungsteil zum Befestigen eines Anbauteils an der Profilschiene, wobei das Befestigungsteil aufweist: einen Nutenstein, der im Inneren der Profilschiene angeordnet ist, und der die Innenstege der Profilschiene hintergreift, einen Klemmkörper, der mit dem Nutenstein verbunden ist, und der von aussen gegen die Profilschiene wirkt, und eine Federeinrichtung, welche durch eine Bewegung des Klemmkörpers vom Nutenstein hinweg spannbar ist.

Eine gattungsgemässe Montageanordnung ist beispielsweise aus der EP 0 687 822 A2 bekannt.

Aufgabe der Erfindung ist es, eine Montageanordnung anzugeben, mit der ein Anbauteil mit besonders geringem Aufwand besonders einfach, schnell, zuverlässig und sicher befestigt werden kann.

Die Aufgabe wird erfindungsgemäss durch eine Montageanordnung mit den Merkmalen des Anspruchs 1 gelöst. Bevorzugte Ausführungsformen sind in den abhängigen Ansprüchen angegeben.

Eine erfindungsgemässe Montageanordnung ist dadurch gekennzeichnet, dass der Klemmkörper relativ zum Nutenstein und relativ zur Profilschiene um eine, vorzugsweise durch den Längsschlitz hindurch verlaufende, Drehachse aus einer Verschiebewinkellage in eine Vormontagewinkellage verdrehbar ist, und dass das Befestigungsteil, insbesondere der Klemmkörper, zumindest eine Betätigungsschrägfläche aufweist, welche den Klemmkörper von der Profilschiene wegdrückt und welche die Federeinrichtung, unter Erhöhung des Anpressdrucks des Nutensteins an die Innenstege, spannt, wenn der Klemmkörper aus der Verschiebewinkellage in die Vormontagewinkellage verdreht wird

Ein Grundgedanke der Erfindung liegt in einem Befestigungsteil mit Drehverriegelung, welche durch eine Verdrehung des Klemmkörpers relativ zur Profilschiene aktiviert wird: wird der Klemmkörper relativ zur Profilschiene aus der Verschiebeposition in die Vormontageposition gedreht, so zwingt die zumindest eine Betätigungsschrägfläche dabei den Klemmkörper von der Profilschiene hinweg, d.h. die Betätigungsschrägfläche wirkt als Steuerkurve bzw. Kulisse. Da der Nutenstein die Innenstege der Profilschiene hintergreift, kann der Nutenstein dieser Translationsbewegung des Klemmkörpers von der Profilschiene hinweg nicht folgen, sondern er bleibt in der Profilschiene zurück. Infolgedessen entfernt sich der Klemmkörper in Richtung der Drehachse vom Nutenstein und die zwischen Nutenstein und Klemmkörper wirkende Federeinrichtung wird unter Erhöhung des von innen an die Innenstege der Profilschiene wirkenden Anpressdrucks des Nutensteins gespannt. Durch die Erhöhung des Anpressdrucks wird die Reibung des Nutensteins an der Profilschiene erhöht und somit das Befestigungsteil gegen eine Verschiebung längs der Profilschiene, insbesondere längs des Längsschlitzes, zumindest vorläufig gesichert.

Erfindungsgemäss muss zum Erreichen der Vormontagestellung der Nutenstein nicht verdreht werden, was eine besonders einfache Handhabung ermöglicht. Insbesondere kann der Nutenstein die Innenstege unverlierbar hintergreifen, d.h. der Nutenstein kann so ausgeführt werden, dass der Nutenstein nicht durch den Längsschlitz, sondern nur durch die Stirnseiten der Montageschiene entnommen werden kann. Hierdurch kann eine besonders hohe Zuverlässigkeit erzielt werden.

Der Nutenstein kann insbesondere einen hammerkopfförmigen bzw. gestaucht T-förmigen Querschnitt aufweisen, wobei die Seitenschenkel des hammerkopfförmigen Querschnitts die Innenstege der Profilschiene hintergreifen, und/oder wobei der Mittelschenkel des hammerkopfförmigen Querschnitts zum Klemmkörper hin ragt. Insbesondere kann vorgesehen sein, dass der Mittelschenkel in den Längsschlitz der Profilschiene hinein ragt, was das stirnseitige Einführen des Nutensteins in die Profilschiene erleichtern kann. Die zumindest eine Betätigungsschrägfläche kann am Klemmkörper, an der Profilschiene und/oder am Nutenstein vorgesehen sein.

Der Klemmkörper und/oder der Nutenstein bestehen bevorzugt aus einem Metallmaterial. Die Profilschiene weist vorzugsweise in Längsrichtung einen konstanten Querschnitt auf, und kann insbesondere als Stranggussteil ausgeführt sein. Geeigneterweise ist zumindest eine Stirnseite der Profilschiene, als so eine der beiden Seiten, welche die Profilschiene in Längsrichtung betrachtet abschliesst, offen, so dass dort der Nutenstein eingeführt werden kann. Der Nutenstein kann insbesondere unverzahnt, also ohne Verzahnung, ausgebildet sein.

Bevorzugt ist es, dass der Klemmkörper zumindest eine Nut zur bereichsweisen Aufnahme der Profilschiene, insbesondere in der Verschiebewinkellage des Klemmkörpers, aufweist, wobei vorzugsweise zumindest eine der Betätigungsschrägflächen in der Nut angeordnet ist. Gemäss dieser Ausführungsform wird zumindest eine der oben genannten Betätigungsschrägflächen, welche den Klemmkörper bei Verdrehung in die Vormontagestellung vom Nutenstein hinweg bewegen, von einer Begrenzungsfläche der Nut gebildet. Diese Ausführungsform kann im Hinblick auf den Fertigungsaufwand vorteilhaft sein, insbesondere weil es diese Ausführungsform ermöglichen kann, den Klemmkörper mit der zumindest einen Nut als Stranggussteil auszuführen. Darüber hinaus kann die zumindest eine Nut auch eine Führungsfunktion haben, und damit die Zuverlässigkeit weiter erhöhen. Vorzugsweise kann zumindest eine Nut zwei der Betätigungsschrägflächen aufweisen, welche in der Nut einander gegenüberliegen. Die zumindest eine Nut kann insbesondere einen der Innenstege der Profilschiene aufnehmen. Geeigneterweise verläuft die zumindest eine Nut in der Verschiebewinkellage parallel zum Längsschlitz der Profilschiene, also in Längsrichtung der Profilschiene, und in der Vormontagestellung quer, insbesondere rechtwinklig, zur Längsrichtung der Profilschiene.

Besonders bevorzugt kann der Klemmkörper zwei Nuten zur bereichsweisen Aufnahme der Profilschiene, insbesondere in der Verschiebewinkellage des Klemmkörpers, aufweisen, wobei geeigneterweise jede Nut zumindest eine der Betätigungsschrägflächen, vorzugsweise zwei der Betätigungsschrägflächen aufweist. Die beiden Nuten verlaufen zweckmässigerweise parallel zueinander. Insbesondere kann vorgesehen sein, dass in der Verschiebewinkellage des Klemmkörpers die erste Nut den ersten Innensteg und die zweite Nut den zweiten Innensteg der Profilschiene aufnimmt.

Weiterhin ist es vorteilhaft, dass der Klemmkörper und der Nutenstein ein Spiel zu den Innenstegen haben, wenn sich der Klemmkörper in der Verschiebewinkellage befindet, so dass das Befestigungsteil längs des Längsschlitzes frei verschiebbar ist. Dies kann beispielsweise durch einen Anschlag realisiert werden, der eine Annährung des Nutensteins an den Klemmkörper begrenzt. Die besagte Ausführungsform kann eine besonders einfache Positionierung des Befestigungsteils längs der Profilschiene ermöglichen. Die freie Verschiebbarkeit kann insbesondere beinhalten, dass der Nutenstein und der Klemmkörper in der Verschiebewinkellage so relativ zur Profilschiene positioniert werden können, dass Nutenstein und Klemmkörper zumindest die Innenstege, vorzugsweise die gesamte Profilschiene, nicht berühren. Demgemäss kann der Anpressdruck des Nutensteins an die Innenstege der Profilschiene in der Verschiebewinkellage des Klemmkörpers auch gleich null sein.

Beispielsweise im Hinblick auf den konstruktiven Aufwand kann es vorteilhaft sein, dass das Befestigungsteil einen Schraubbolzen aufweist, der den Klemmkörper und den Nutenstein verbindet. Besonders bevorzugt ist es, dass durch Anziehen des Schraubbolzens das Anbauteil zwischen dem Klemmkörper und der Profilschiene, in der sich der Nutenstein befindet, festlegbar ist, vorzugsweise formschlüssig festlegbar ist, zusätzlich oder alternativ auch verklemmbar ist. Insbesondere kann durch Anziehen des Schraubbolzens ein Endmontagezustand realisiert werden, bei welchem das Anbauteil zwischen dem Klemmkörper und der Profilschiene festgelegt ist, und bei welchem die Innenstege verglichen mit dem Vormontagezustand besonders fest zwischen dem Klemmelement und dem Nutenstein verklemmt sind.

Vorzugsweise ist im Nutenstein eine Bohrung, insbesondere eine Durchgangsbohrung, mit einem Innengewinde vorgesehen, welches mit einem Aussengewinde des Schraubbolzens korrespondiert. In dem Klemmkörper ist geeigneterweise eine Durchgangsbohrung für den Schraubbolzen vorgesehen, welche so gross ist, dass der Schraubbolzen darin axial verschiebbar ist, und welche insbesondere als Stufenbohrung ausgeführt sein kann. Der Schraubbolzen weist bevorzugt einen Kopf auf, der querschnittsgrösser als die Durchgangsbohrung im Klemmkörper ist, so dass der Kopf im Endmontagezustand eine Axialkraft auf den Klemmkörper aufbringen kann.

Eine weitere bevorzugte Ausführungsform liegt darin, dass die Federeinrichtung auf der dem Nutenstein abgewandten Seite des Klemmkörpers angeordnet ist. Dies kann beispielsweise im Hinblick auf den Fertigungsaufwand vorteilhaft sein.

Insbesondere kann vorgesehen sein, dass die Federeinrichtung eine Schraubenfeder aufweist, welche bevorzugt den Schraubbolzen umgibt. Dies kann unter anderem im Hinblick auf die Zuverlässigkeit vorteilhaft sein, insbesondere weil eine Schraubenfeder in besonders einfacher Weise unverlierbar platziert werden kann. Zweckmässigerweise ist die Schraubenfeder zwischen dem Kopf des Schraubbolzens und dem Klemmkörper angeordnet und/oder stützt sich die Schraubenfeder einerseits am Kopf des Schraubbolzens und andererseits am Klemmkörper ab, vorzugsweise, aber nicht notwendigerweise unmittelbar.

Eine weitere vorteilhafte Weiterbildung besteht darin, dass der Nutenstein durch den Längsschlitz unverlierbar im Inneren der Profilschiene angeordnet ist. Dies kann insbesondere beinhalten, dass der Nutenstein in keiner wie auch immer gearteten Position relativ zur Profilschiene durch den Längsschlitz hindurch aus der Profilschiene entnommen werden kann, sondern dass der Nutenstein nur über eine offenen Stirnseite der Profilschiene in die Profilschiene einführbar ist bzw. aus der Profilschiene entnehmbar ist. Hierdurch kann die Zuverlässigkeit noch weiter erhöht werden.

Besonders bevorzugt ist es, dass der Nutenstein verdrehsicher, insbesondere bezüglich der Drehachse des Klemmkörpers, im Inneren der Profilschiene angeordnet ist, was insbesondere heissen kann, dass der Nutenstein allenfalls um einen unwesentlichen, z. B. Toleranzen geschuldeten Winkelbetrag von beispielsweise kleiner 20°, insbesondere kleiner 10°, 5° oder 2°, um die Drehachse gedreht werden kann. Somit ist eine definierte Drehposition des Nutensteins in der Profilschiene gegeben, was die Zuverlässigkeit weiter erhöhen kann. Insbesondere können die Abmessungen des Nutensteins in Längsrichtung der Profilschiene grösser sein als quer hinzu.

Vorzugsweise kann vorgesehen sein, dass der Klemmkörper in der Vormontagewinkellage unter Erhöhung der Spannung der Federeinrichtung zumindest teilweise von der Profilschiene abhebbar ist, insbesondere so von der Profilschiene abhebbar ist, dass ein Teil des Anbauteils zwischen Klemmkörper und Profilschiene einschiebbar ist. Dies kann dadurch erreicht werden, dass die Federeinrichtung einen genügend grossen Federweg aufweist. Gemäss dieser Ausführungsform kann der Klemmkörper auch zur zumindest vorläufigen Befestigung des Anbauteils dienen, welches zwischen Klemmkörper und Profilschiene eingebracht wird und durch die Wirkung des Federelements zwischen Klemmkörper und Profilschiene eingeklemmt wird.

Durch anschliessendes Anziehen des Schraubbolzens kann die Federkraft des Federelementes weiter erhöht werden und ein Endmontagezustand erreicht werden, in dem der Nutenstein mit hohem Anpressdruck gegen die die Innenstege der Profilschiene gezogen wird und/oder in dem das Anbauteil zwischen Klemmkörper und Profilschiene reibschlüssig oder/und formschlüssig gesichert ist. Besonders bevorzugt ist es also, dass das Anbauteil in einem Endmontagezustand zwischen dem Klemmkörper und der Profilschiene festgelegt, insbesondere verklemmt ist. In diesem Endmontagezustand befindet sich der Klemmkörper vorzugsweise weiterhin in einer Winkellage, in der die Nuten winklig, insbesondere rechtwinklig, zur Längsachse der Profilschiene verlaufen. Im Endmontagezustand kann der Klemmkörper auf Block mit dem Nutenstein verbunden sein, d.h. das Federelement kann in diesem Zustand maximal eingefedert sein. Insbesondere kann im Endmontagezustand der Kopf des Schraubbolzens unmittelbar auf dem Klemmkörper aufliegen.

Insbesondere kann vorgesehen sein, dass das zu befestigende Anbauteil eine weitere Profilschiene ist. Diese weitere Profilschiene kann ebenfalls einen konstanten Querschnitt in Längsrichtung aufweisen, und kann vorzugsweise als Stranggussteil ausgeführt sein.

Weiterhin ist es bevorzugt, dass der Klemmkörper eine Aufnahmenut für einen Anschlussflansch des Anbauteils aufweist. Hierdurch kann eine besonders sichere Verbindung erzielt werden. Die Aufnahmenut verläuft geeigneterweise parallel zu der oben genannten zumindest einen Nut. Insbesondere kann das Anbauteil hakenartig in die Aufnahmenut eingreifen.

Eine weitere vorteilhafte Ausgestaltung der Erfindung liegt darin, dass der Klemmkörper L-förmig mit einem Auflageschenkel zur Auflage auf der Profilschiene und einem Sicherungsschenkel zur Anlage am Anbauteil ausgeführt ist. Der Sicherungsschenkel kann insbesondere einen Anschlag bilden, der eine Bewegung des Anbauteils quer zur Profilschiene und/oder ein Verkippen des Anbauteils um die Längsachse der Profilschiene, welches eventuell den Anschlussflansch aus der Aufnahmenut herausdrehen könnte, begrenzt. Der Auflageschenkel und der Sicherungsschenkel können bevorzugt rechtwinklig zueinander verlaufen. Für eine noch bessere Anbindung des Anbauteils kann der Sicherungsschenkel auch eine Verzahnung aufweisen. Der Aufnahmesteg ist bevorzugt am Übergang zwischen dem Auflageschenkel und dem Sicherungsschenkel angeordnet. Insbesondere kann vorgesehen sein, dass der Klemmkörper, insbesondere sein Sicherungsschenkel, das Anbauteil in zwei voneinander getrennten Bereichen berührt, nämlich im Bereich der Aufnahmenut und in einem Kontaktbereich. Zwischen diesen Bereichen ist der Sicherungsschenkel bevorzugt vom Anbauteil beabstandet.

Die Erfindung betrifft auch ein Verfahren zum Befestigen eines Anbauteils an einer erfindungsgemässen Montageanordnung, welches folgende Schritte umfasst:
- Einführen des Nutensteins des Befestigungsteils in die Profilschiene,
- Verschieben des Befestigungsteils längs der Profilschiene,
- Verdrehen des Klemmkörpers aus der Verschiebeposition in die Vormontageposition,
- Einbringen des Anbauteils zwischen den Klemmkörper und die Profilschiene, und
- Festlegen des Anbauteils zwischen dem Klemmkörper und der Profilschiene, insbesondere so, dass ein Endmontagezustand erreicht wird.

Das Festlegen des Anbauteils kann insbesondere durch Festziehen des Schraubbolzens geschehen. Das Anbauteil kann auch als Bestandteil der Montageanordnung angesehen werden.

Die Erfindung erlaubt es dem Monteur, das Befestigungsteil mit geringer Reibung entlang der Profilschiene in eine gewünschte Position zu verschieben und das Befestigungsteil dann in einen Vormontagezustand zu bringen, in dem die kombinierte Form der Profilschiene und des Befestigungsteils verhindert, dass sich das Befestigungsteil von der gewünschten Position hinwegwegverschiebt. Um den Vormontagezustand zu erreichen, dreht der Monteur den Klemmkörper des Befestigungsteils um 90°. Dies spannt die Federeinrichtung und bewirkt gelichzeitig einen Klemmdruck auf die Innenstege der Schiene, da die Innenstege zwischen dem Klemmkörper und dem Nutenstein eingezwängt werden. Im Vormontagezustand bleibt das Befestigungsteil in seiner Position und es kann insbesondere aufgrund des Formschlusses des Nutensteins in der Profilschiene nicht aus dem Schlitz herausgezogen werden. Wenn eine geringe Kraft aufgebracht wird, kann das Befestigungsteil im Vormontagezustand allerdings weiterhin längs der Profilschiene vor- und zurückversetzt werden und somit abschliessend positioniert werden. Die Federeinrichtung hat im Vormontagezustand ausreichend Restfederweg zur Verfügung, so dass das Befestigungsteil das Anbauteil greifen kann. Abschliessend wird der Schraubbolzen angezogen und damit der Endmontagezustand erreicht.

Die erfindungsgemässe Montageanordnung kann insbesondere eine Tragkonstruktion für Solarpaneele, vorzugsweise Photovoltaikpaneele sein. Das erfindungsgemässe Befestigungsteil kann dazu verwendet werden, zwei Schienen zu verbinden, insbesondere rechtwinklig zu verbinden.

Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: eine perspektivische Darstellung einer erfindungsgemässen Montageanordnung mit dem Klemmkörper in Verschiebeposition;
- Figur 2:: eine Seitenansicht der Montageanordnung nach Figur 1 mit dem Klemmkörper in Verschiebeposition;
- Figur 3:: eine Längsschnittansicht der Montageanordnung nach Figur 1 mit dem Klemmkörper in Verschiebeposition;
- Figur 4:: eine Detailansicht der Montageanordnung nach Figur 1 von der Stirnseite der Profilschiene ähnlich Figur 2 mit dem Klemmkörper in Verschiebeposition;
- Figur 5:: eine perspektivische Ansicht der Montageanordnung nach Figur 1 mit dem Klemmkörper in Vormontageposition;
- Figur 6:: eine Längsschnittansicht der Montageanordnung nach Figur 1 mit dem Klemmkörper in Vormontageposition;
- Figur 7:: eine perspektivische Ansicht der Montageanordnung nach Figur 1 im Endmontagezustand mit einem Anbauteil;
- Figur 8:: eine Längsschnittansicht ähnlich Figur 3 der Montageanordnung nach Figur 1 im Endmontagezustand mit einem Anbauteil; und
- Figur 9:: eine Detailansicht von der Seite ähnlich Figur 4 einer zweiten Ausführungsform einer erfindungsgemässen Montageanordnung im Verschiebezustand, wobei der Nutenstein der Übersichtlichkeit halber nicht dargestellt ist.

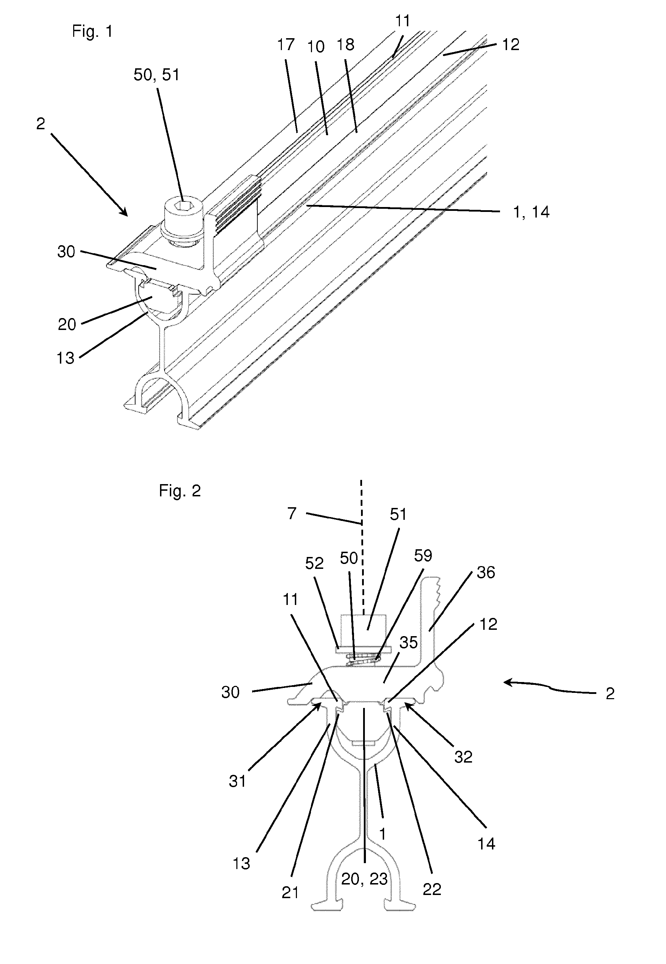

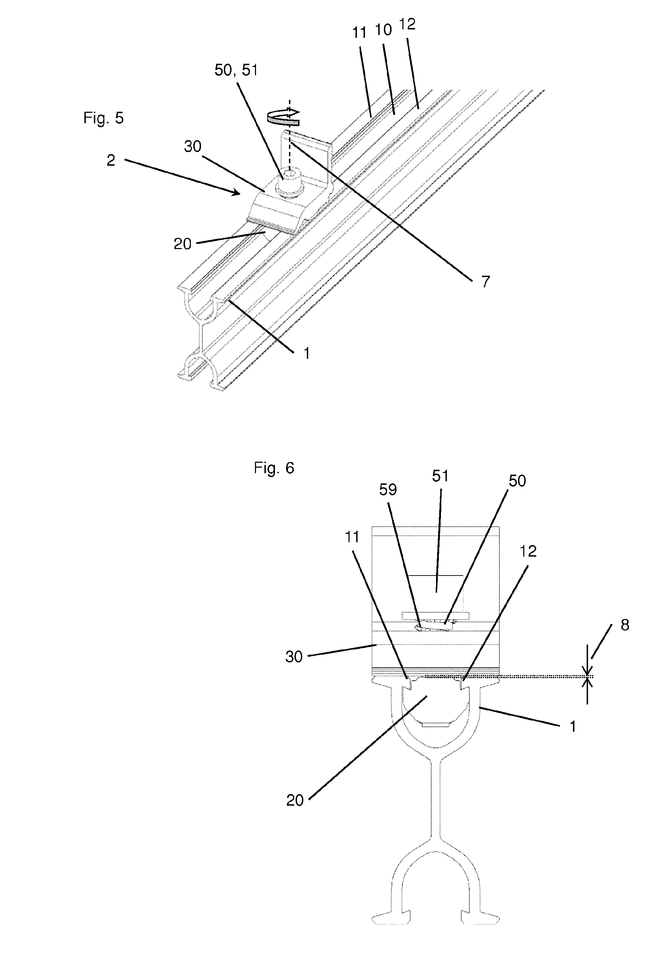

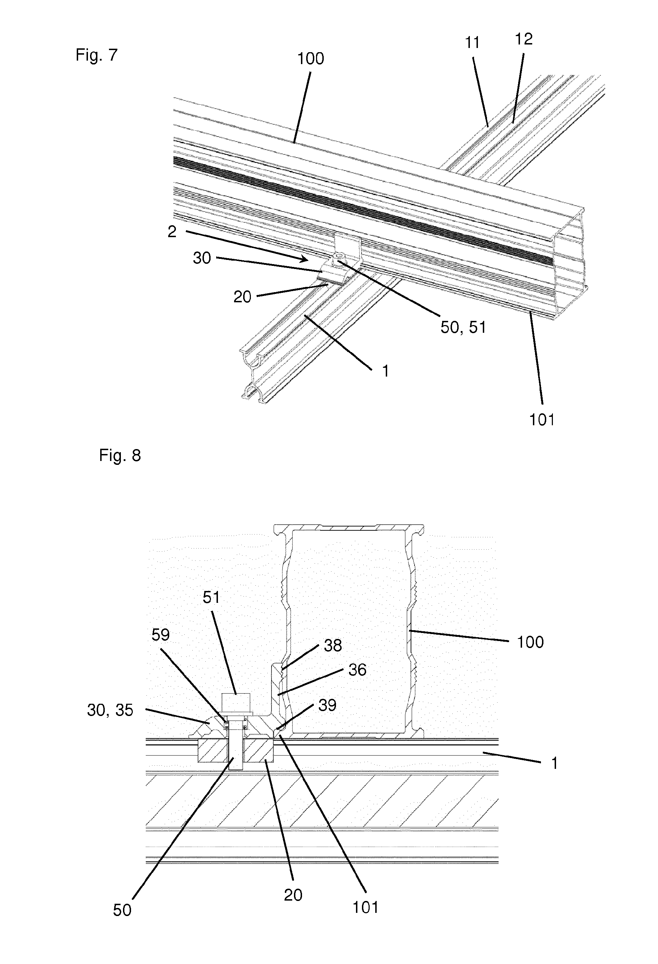

Die Figuren 1 bis 8 zeigen ein erstes Ausführungsbeispiel einer erfindungsgemässen Montageanordnung in verschiedenen Betriebszuständen, nämlich in Figuren 1 bis 4 im Verschiebezustand, in Figuren 5 und 6 im Vormontagezustand und in Figuren 7 und 8 im Endmontagezustand.

Wie beispielsweise die Figuren 1 und 2 zeigen, weist die Montageanordnung zum einen eine Profilschiene 1 mit einem längs der Profilschiene 1 verlaufenden Längsschlitz 10 auf. Dieser Schlitz 10 wird von zwei Innenstegen 11 und 12 der Profilschiene 1 flankiert.

Die Montageanordnung weist ferner ein Befestigungsteil 2 auf, welches sich durch den Längsschlitz 10 hindurch erstreckt. Das Befestigungsteil 2 weist einen Nutenstein 20, der sich zumindest teilweise, insbesondere vollständig, im Inneren der Profilschiene 1 befindet, sowie einem Klemmkörper 30 auf, der sich zumindest teilweise, insbesondere vollständig, ausserhalb der Profilschiene 1 befindet. Der Klemmkörper 30 liegt auf der Profilschiene 1 auf, und zwar auf der Seite der Profilschiene 1, in der sich der Längsschlitz 10 befindet, und unter anderem auf den Innenstegen 11 und 12. Der Klemmkörper 30 und der Nutenstein 20 sind über einen Schraubbolzen 50 verbunden, der durch den Klemmkörper 30 frei hindurchtritt, und der im Nutenstein 20 verschraubt ist.

Wie insbesondere Figur 2 zeigt, weist der Nutenstein 20 im Querschnitt ein hammerkopfartiges Profil mit einem Mittelschenkel 23 und zwei Seitenschenkeln 21 und 22 auf, die auf gegenüberliegenden Seiten vom Mittelschenkel 23 vorstehen. Die beiden Seitenschenkel 21 und 22 hintergreifen jeweils einen der Innenstege 11 bzw. 12 der Profilschiene 1, und der Mittelschenkel 23 steht zwischen die beiden Innenstege 11 und 12 vor.

Der Klemmkörper 30 ist im Querschnitt L-förmig mit einem Auflageschenkel 35 und einem etwa senkrecht hiervon abstehenden Sicherungsschenkel 36 ausgebildet. Der Auflageschenkel 35 liegt auf der Profilschiene 1 auf, und der Sicherungsschenkel 36 dient wie weiter unten im Detail erläutert der Sicherung eines Anbauteils 100.

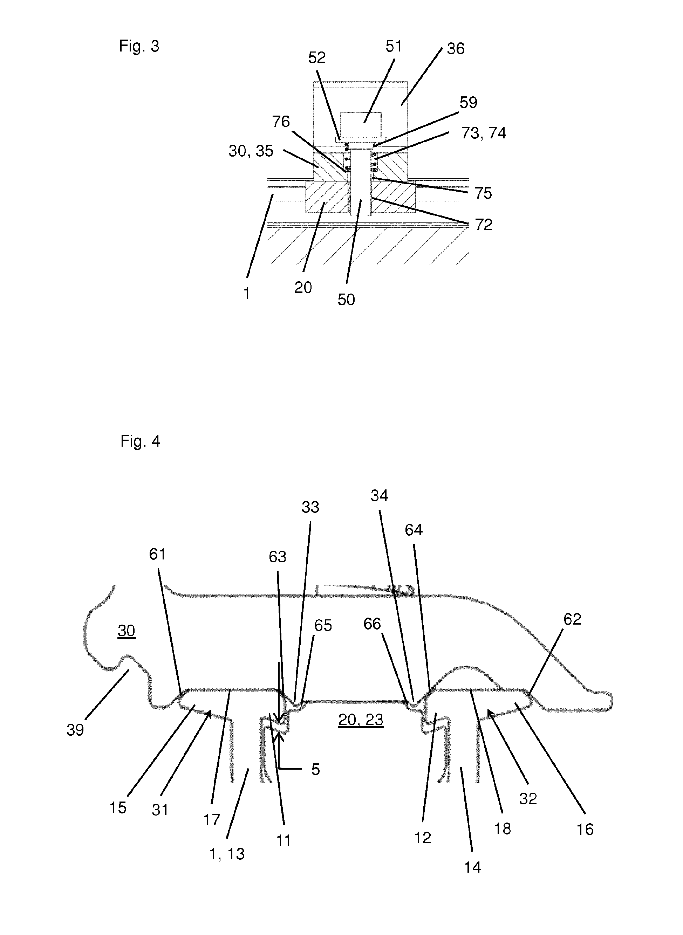

Wie insbesondere Figur 3 zeigt, ist der Schraubbolzen 50 durch eine Durchgangsbohrung 73 im Auflageschenkel 35 des Klemmkörpers 30 hindurchgeführt. Diese Durchgangsbohrung 73 ist so querschnittsgrösser als der Schaft des Schraubbolzens 50 dimensioniert, dass der Schaft des Schraubbolzens 50 in der Durchgangsbohrung 73 axial frei ist. Im Nutenstein 20 ist eine Durchgangsbohrung 72 mit einem Innengewinde vorgesehen, welches mit dem Aussengewinde des Schraubbolzens 50 korrespondiert. In dieses Innengewinde ist der Schraubbolzen 50 eingeschraubt.

Die Durchgangsbohrung 73 des Klemmkörpers 30 ist als Stufenbohrung ausgeführt. Als solche weist die Durchgangsbohrung 73 einen durchmessergrösseren Bereich 74 und einen durchmesserkleineren Bereich 75 auf, wobei der durchmesserkleinere Bereich 75 näher am Nutenstein 20 liegt als der durchmessergrössere Bereich 74. Zwischen den beiden Bereichen 74 und 75 der Durchgangsbohrung 73 ist eine Ringstufe 76 ausgebildet.

Der Schraubbolzen 50 weist einen Kopf 51 auf, an dem zum Drehen des Schraubenschaftes ein Drehwerkzeug angesetzt werden kann. Der Kopf 51 hat einen so grossen Querschnitt, dass der Kopf 51 nicht durch die Durchgangsbohrung 73 des Klemmkörpers 30 hindurchtreten kann. Insbesondere ist der Querschnitt des Kopfes 51 querschnittsgrösser als der durchmessergrössere Bereich 74. Damit kann der Kopf 51 des Schraubbolzens 50 eine Axialkraft auf den Klemmkörper 30 ausüben. Im dargestellten Ausführungsbeispiel ist der Kopf 51 mehrteilig ausgeführt und umfasst auch eine Unterlegscheibe 52, die gegenüber dem Schaft des Schraubbolzens 50 drehbar ist. Gegebenenfalls kann der Kopf 51 auch andere Distanzkörper, insbesondere starre Distanzkörper, aufweisen.

Das Befestigungsteil 2 weist ferner eine Federeinrichtung mit einer Schraubenfeder 59 auf. Diese Schraubenfeder 59 umgibt den Schraubbolzen 50 und stützt sich einerseits am Kopf 51 des Schraubbolzens 50, nämlich an dessen Unterlegscheibe 52, und anderseits am Klemmkörper 30, nämlich an dessen Ringstufe 76, ab.

Wie insbesondere in den Figuren 2 und 4 erkennbar ist, weist die Profilschiene 1 zwei längs des Längsschlitzes 10 verlaufende Seitenwände 13, 14 auf, die auf derjenigen Seite der Profilschiene 1, die dem Schlitz 10 abgewandt ist, miteinander verbunden sind. Am Ende der ersten Seitenwand 13 sind der erste Innensteg 11 sowie, auf der dem erste Innensteg 11 gegenüberliegenden Seite, ein erster Aussensteg 15 angeordnet. Am Ende der zweiten Seitenwand 14 sind der zweite Innensteg 12 sowie, auf der dem zweiten Innensteg 12 gegenüberliegenden Seite, ein zweiter Aussensteg 16 angeordnet. Die Innenstege 11 und 12 weisen zur jeweils benachbarten Seitenwand 14 bzw. 13 hin, während die Aussenstege 15 und 16 von der jeweils benachbarten Seitenwand 14 bzw. 13 weg weisen. Der erste Innensteg 11, der erste Aussensteg 15 und die erste Seitenwand 13 bilden im Querschnitt eine T-förmige Struktur. Analog bilden der zweite Innensteg 12, der zweite Aussensteg 16 und die zweite Seitenwand 14 im Querschnitt eine T-förmige Struktur. Der erste Innensteg 11 und der erste Aussensteg 15 bilden eine erste ebene Kontaktfläche 17, und der zweite Innensteg 12 und der zweite Aussensteg 16 bilden eine zweite ebene Kontaktfläche 18. In Draufsicht auf den Schlitz 10 liegen die beiden Kontaktflächen 17 und 18 auf gegenüberliegenden Seiten des Schlitzes 10. An den Kontaktflächen 17 und 18 liegt die Profilschiene 1, insbesondere in der Verschiebestellung und/oder der Vormontagestellung und/oder auch in der Endmontagestellung am Klemmkörper 30 an.

Wie insbesondere in den Figuren 2 und 4 erkennbar ist, weist der Klemmkörper 30 in seinem Auflageschenkel 35 auf der dem Kopf 51 des Schraubbolzens 50 abgewandten und der Profilschiene 1 zugewandten Unterseite zwei parallel verlaufende, gerade Nuten 31 und 32 auf. Die Nuten 31 und 32 verlaufen parallel zur Biegekante, die zwischen dem Auflageschenkel 35 und Sicherungsschenkel 36 gegeben ist, und erstrecken sich über den gesamten Klemmkörper 30. In diesen Nuten 31 und 32 ist die Profilschiene 1 in der in den Figuren 1 bis 4 dargestellten Vormontageposition bereichsweise aufgenommen. Insbesondere sind in der Vormontageposition die Innenstege 11 und 12 sowie die Aussenstege 15 und 16 zumindest bereichsweise in den Nuten 31 bzw. 32 aufgenommen, so dass die Kontaktflächen 17 und 18 am Nutengrund der jeweiligen Nuten 31 bzw. 32 anliegen.

Wie insbesondere Figur 4 zeigt, weist der Klemmkörper 30 zwei Positionierungsstege 33, 34 auf, die in dem in Figur 4 dargestellten Verschiebezustand in den Längsschlitz 10, insbesondere zwischen die beiden Innenstege 11 und 12 der Profilschiene 1 ragen.

Wie insbesondere Figur 4 weiter zeigt, weist das Befestigungsteil 2 mehrere paarweise angeordnete Betätigungsschrägflächen auf, deren Funktion weiter unten im Detail erläutert wird. Die Paare bestehen jeweils aus einer Schrägfläche am Klemmkörper 30 und einer gegenüberliegenden korrespondierenden Schrägfläche an der Profilschiene 1 oder am Nutenstein 20. Ein erstes aussenseitiges Paar Betätigungsschrägflächen 61 ist am Klemmkörper 30 in der ersten Nut 31 bzw. am gegenüberliegenden ersten Aussensteg 15 vorgesehen. Analog ist ein zweites aussenseitiges Paar Betätigungsschrägflächen 62 am Klemmkörper 30 in der zweiten Nut 32 bzw. am gegenüberliegenden zweiten Aussensteg 16 vorgesehen. Ein erstes innenseitiges Paar Betätigungsschrägflächen 63 ist am Klemmkörper 30 in der ersten Nut 31, insbesondere am ersten Positionierungssteg 33, bzw. am gegenüberliegenden ersten Innensteg 11 vorgesehen. Analog ist ein zweites innenseitiges Paar Betätigungsschrägflächen 64 am Klemmkörper 30 in der zweiten Nut 32, insbesondere am zweiten Positionierungssteg 34, bzw. am gegenüberliegenden zweiten Innensteg 12 vorgesehen. Ein weiteres erstes Paar Betätigungsschrägflächen 65 ist am Klemmkörper 30 am ersten Positionierungssteg 33 bzw. am Mittelschenkel 23 des Nutensteins 20 vorgesehen. Ein weiteres zweites Paar Betätigungsschrägflächen 66 ist am Klemmkörper 30 am zweiten Positionierungssteg 34 bzw. am Mittelschenkel 23 des Nutensteins 20 vorgesehen. Durch die Vielzahl der Schrägflächen und/oder deren paarweise Anordnung kann einem Verkanten besonders wirksam entgegengewirkt werden. Grundsätzlich kann es aber auch ausreichend sein, die Betätigungsschrägflächen nicht zu paaren, so dass zumindest ein Teil der Betätigungsschrägflächen keine korrespondierende gegenüberliegende Betätigungsschrägfläche hat.

Bei der Montage wird der Nutenstein 20 des Befestigungsteils 2 stirnseitig in die Profilschiene 1 eingeschoben. Der Klemmkörper 30 wird dabei so relativ zum Nutenstein 20 angeordnet, dass die im Klemmkörper 30 angeordneten Nuten 31 und 32 in Längsrichtung der Profilschiene 1 verlaufen. Es ergibt sich ein Vormontagezustand, der in den Figuren 1 bis 4 dargestellt ist. In diesem Vormontagezustand liegt der Klemmkörper 30 am Nutenstein 20, insbesondere an seinem Mittelschenkel 23 an, und der Klemmkörper 30 und der Nutenstein 20 umgreifen die beiden Innenstege 11 und 12 der Profilschiene 1 mit einem gewissen Spiel 5 (vgl. Figur 4), so dass das Befestigungsteil 2 mit nur geringer Reibung längs der Profilschiene 1 verschoben werden kann.

Wenn die vorgesehene Endposition des Befestigungsteils 2 längs der Profilschiene 1 in etwa erreicht ist, kann der Monteur wie in Figur 5 gezeigt den Klemmkörper 30 relativ zum Nutenstein 20 um eine Drehachse 7, welche mit der Längsachse des Schraubbolzens 50 zusammenfällt, in die in den Figuren 5 und 6 dargestellte Vormontageposition drehen, und zwar insbesondere um etwa 90°. Bei dieser Drehbewegung gelangen die Stege 11, 12, 15 und 16 der Profilschiene 1 aus den Nuten 31 und 32 des Klemmkörpers 30, und die Betätigungsschrägflächen 61 bis 66 drücken den Klemmkörper 30 axial bezogen auf die Drehachse 7 von der Profilschiene 1 und vom Nutenstein 20 hinweg, so dass fortan ein Abstand 8 zwischen Klemmkörper 30 und Nutenstein 20 besteht (vgl. Fig. 6). Bei der axialen Bewegung des Klemmkörpers 30 vom Nutenstein 20 hinweg wird die Schraubenfeder 59 komprimiert und gespannt. Die Spannung der Schraubenfeder 59 verklemmt die Profilschiene 1, insbesondere deren Stege 11, 12, 15 und 16, zwischen dem Klemmkörper 30 und dem Nutenstein 20, so dass im Vormontagezustand eine verglichen mit dem Verschiebezustand höhere Kraft erforderlich ist, um das Befestigungsteil 2 längs der Profilschiene 1 zu verschieben. Einem versehentlichen Verschieben ist somit entgegengewirkt, jedoch ist ein absichtliches Verschieben weiterhin möglich.

Anschliessend kann der Monteur das Anbauteil 100, welches wie in den Figuren 7 und 8 gezeigt als Hohlprofilschiene ausgebildet ist, am Befestigungsteil 2 anordnen. Der Schaft des Schraubbolzens 50 ist so lang ausgebildet, dass der Monteur den Klemmkörper 30 in der Vormontagestellung von der Profilschiene 1 hinweg so abheben kann, dass ein Anschlussflansch 101 des Anbauteils 100 zwischen den Klemmkörper 30 und die Profilschiene 1 eingeschoben werden kann.

Sodann kann der Monteur den Schraubbolzen 50 so lange anziehen, bis ein Endmontagezustand erreicht ist, in welchem der Klemmkörper 30 und der Nutenstein 20 auf Block verschraubt sind, das heisst in welchem Axialkräfte zwischen dem Schraubbolzen 50 und dem Klemmkörper 30 nicht mehr ausschliesslich mittelbar über die Schraubenfeder 59, sondern auch unmittelbar vom Schraubbolzen 50 auf den Klemmkörper 30 übertragen werden. Dieser Endmontagezustand ist in den Figuren 7 und 8 dargestellt. Im Endmontagezustand ist die Profilschiene 1 mit einer gegenüber dem Vormontagezustand nochmals erhöhten Klemmkraft zwischen dem Nutenstein 20 und dem Klemmkörper 30 verklemmt, so dass im Endmontagezustand eine verglichen mit dem Vormontagezustand nochmals deutlich höhere Kraft erforderlich ist, um das Befestigungsteil 2 längs der Profilschiene 1 zu verschieben.

Im Endmontagezustand liegt der Kopf 51 des Schraubbolzens 50 auf dem Klemmkörper 30 auf. Der Kopf 51 dringt aber allenfalls teilweise in die Durchgangsbohrung 73 ein, so dass die Schraubenfeder 59 eine Restlänge behält. Der obere, durchmessergrössere Bereich 74 der Durchgangsbohrung 73 bildet somit einen Schutzraum für die Schraubenfeder 59.

Wie insbesondere die Figuren 4 und 8 zeigen, weist der Klemmkörper 30 eine Aufnahmenut 39 für den Anschlussflansch 101 des Anbauteils 100 auf. Die Aufnahmenut 39 ist zur Profilschiene 1 hin offen und verläuft vorzugsweise parallel zu den Nuten 31 und 32. Insbesondere kann die Aufnahmenut 39 am Übergang zwischen Auflageschenkel 35 und Sicherungsschenkel 36 vorgesehen sein. Im Endmontagezustand hintergreift der zwischen Klemmkörper 30 und Profilschiene 1 verlaufende Anschlussflansch 101 die Aufnahmenut 39 hakenartig. Hierdurch ist ein Formschluss zwischen dem Befestigungsteil 2, insbesondere seinem Klemmkörper 30, und dem Anbauteil 100 gegeben, der verhindert, dass das Anbauteil 100 quer zur Aufnahmenut 39 bewegt werden. Im Endmontagezustand kann das Anbauteil 100 zwischen dem Klemmkörper 30 und der Profilschiene 1 verklemmt sein, wobei der Klemmkörper 30 vorzugsweise so ausgebildet ist, dass die Klemmkraft auf das Anbauteil 100 begrenzt ist. Hierzu kann der Klemmkörper 30 so ausgebildet sein, dass er im Endmontagezustand unmittelbar auf der Profilschiene 1 aufliegt, so dass ein Teil der Klemmkräfte am Anbauteil 100 vorbei unmittelbar in die Profilschiene 1 eingeleitet wird.

Im Endmontagezustand liegt auch der Sicherungsschenkel 36 des Klemmkörpers 30 am Anbauteil 100 an, und zwar in einem verzahnten Kontaktbereich 38 am Ende des Sicherungsschenkels 36. Dies verhindert, dass das Anbauteil 100 aus der Aufnahmenut 39 herausgedreht wird. Der verzahnten Kontaktbereich 38 liegt in einem verzahnten Gegenkontaktbereich des Anbauteils 100 am Anbauteil 100 an. Insgesamt liegt das Anbauteil 100 in zwei Bereichen am Klemmkörper 30 an, nämlich im Bereich der Aufnahmenut 39 und im Kontaktbereich 38. Zwischen diesen Bereichen sind das Anbauteil 100 und der Klemmkörper 30 voneinander beabstandet.

Der Nutenstein 20 ist so dimensioniert, dass er in der Profilschiene 1 allenfalls um einen geringen Winkelbetrag um die Drehachse 7 verdreht werden kann, und dass er, gleich welche Lage um die Drehachse 7 er auch haben mag, nicht aus dem Schlitz 10 herausgezogen kann. Der Nutenstein 20 ist somit durch den Schlitz 10 unverlierbar.

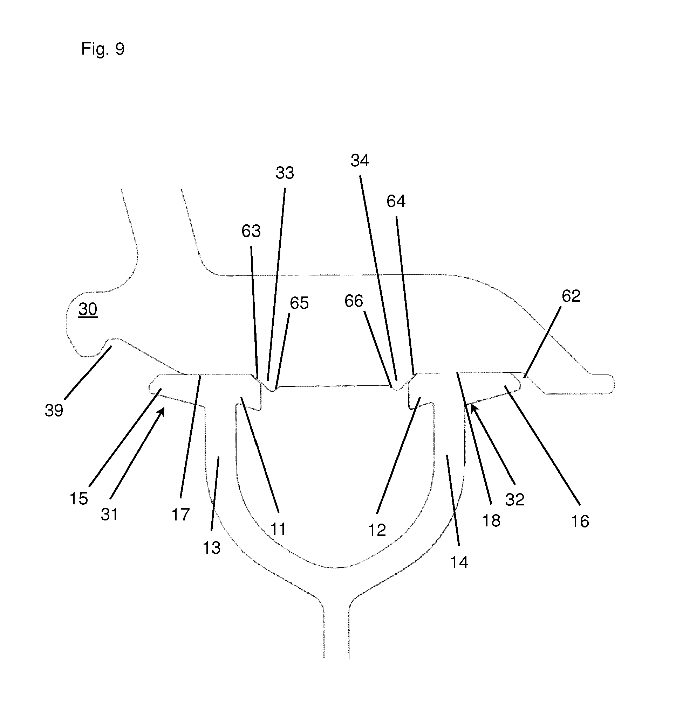

Eine weitere Ausführungsform einer erfindungsgemässen Montageanordnung ist im Verschiebezustand in Figur 9 dargestellt. Das Ausführungsbeispiel der Figur 9 unterscheidet sich vom zuvor beschriebenen Ausführungsbeispiel im Wesentlichen dadurch, dass die Aufnahmenut 39 unmittelbar schräg in die Nut 31 übergeht. An der Nut 31 ist dabei nur noch ein Schrägflächenpaar 63 gegeben, wohingegen das äussere Schrägflächenpaar 61 der Figur 4 beim Ausführungsbeispiel der Figur 9 fehlt.

## Patentansprüche

1. Montageanordnung bestehend aus einer Profilschiene (1) mit einem Längsschlitz (10), welcher von zwei parallel verlaufenden Innenstegen (11, 12) der Profilschiene (1) begrenzt wird, und aus einem Befestigungsteil (2) zum Befestigen eines Anbauteils (100) an der Profilschiene (1), wobei das Befestigungsteil (2) aufweist:
- einen Nutenstein (20), der im Inneren der Profilschiene (1) angeordnet ist, und der die Innenstege (11, 12) der Profilschiene (1) hintergreift,
- einen Klemmkörper (30), der mit dem Nutenstein (20) verbunden ist, und der von aussen gegen die Profilschiene (1) wirkt, und
- eine Federeinrichtung, welche durch eine Bewegung des Klemmkörpers (30) vom Nutenstein (20) hinweg spannbar ist,
**dadurch gekennzeichnet,**
- **dass** der Klemmkörper (30) relativ zum Nutenstein (20) und relativ zur Profilschiene (1) um eine Drehachse (7) aus einer Verschiebewinkellage in eine Vormontagewinkellage verdrehbar ist,
- und **dass** das Befestigungsteil (2) zumindest eine Betätigungsschrägfläche (61 - 66) aufweist, welche den Klemmkörper (30) von der Profilschiene (1) wegdrückt und welche die Federeinrichtung, unter Erhöhung des Anpressdrucks des Nutensteins (20) an die Innenstege (11, 12), spannt, wenn der Klemmkörper (30) aus der Verschiebewinkellage in die Vormontagewinkellage verdreht wird.

2. Montageanordnung nach Anspruch 1,
**dadurch gekennzeichnet,**
**dass** der Klemmkörper (30) zumindest eine Nut (31, 32) zur bereichsweisen Aufnahme der Profilschiene (1) aufweist, und
**dass** die zumindest eine Betätigungsschrägfläche (61 - 66) in der Nut (31, 32) angeordnet ist,
wobei die zumindest eine Nut (31, 32) in der Verschiebewinkellage in Längsrichtung der Profilschiene (1) und in der Vormontagestellung rechtwinklig zur Längsrichtung der Profilschiene (1) verläuft.

3. Montageanordnung nach einem der vorstehenden Ansprüche,
**dadurch gekennzeichnet,**
**dass** der Klemmkörper (30) und der Nutenstein (20) ein Spiel zu den Innenstegen (11, 12) haben, wenn sich der Klemmkörper (30) in der Verschiebewinkellage befindet, so dass das Befestigungsteil (2) längs des Längsschlitzes (10) frei verschiebbar ist.

4. Montageanordnung nach einem der vorstehenden Ansprüche,
**dadurch gekennzeichnet,**
**dass** das Befestigungsteil (2) einen Schraubbolzen (50) aufweist, der den Klemmkörper (30) und den Nutenstein (20) verbindet.

5. Montageanordnung nach Anspruch 4,
**dadurch gekennzeichnet,**
**dass** die Federeinrichtung eine Schraubenfeder (59) aufweist, die den Schraubbolzen (50) umgibt.

6. Montageanordnung nach einem der vorstehenden Ansprüche,
**dadurch gekennzeichnet,**
**dass** der Nutenstein (20) durch den Längsschlitz (10) unverlierbar im Inneren der Profilschiene (1) angeordnet ist, und
**dass** der Nutenstein (20) verdrehsicher bezüglich der Drehachse (7) im Inneren der Profilschiene (1) angeordnet ist.

7. Montageanordnung nach einem der vorstehenden Ansprüche,
**dadurch gekennzeichnet,**
**dass** der Klemmkörper (30) in der Vormontagewinkellage unter Erhöhung der Spannung der Federeinrichtung zumindest teilweise von der Profilschiene (1) abhebbar ist.

8. Montageanordnung nach einem der vorstehenden Ansprüche,
**dadurch gekennzeichnet,**
**dass** das Anbauteil (100) in einem Endmontagezustand zwischen dem Klemmkörper (30) und der Profilschiene (1) festgelegt ist.

9. Montageanordnung nach einem der vorstehenden Ansprüche,
**dadurch gekennzeichnet,**
**dass** das Anbauteil (100) eine weitere Profilschiene ist,
**dass** der Klemmkörper (30) eine Aufnahmenut (39) für einen Anschlussflansch (101) des Anbauteils (100) aufweist, und
**dass** der Klemmkörper (30) L-förmig mit einem Auflageschenkel (35) zur Auflage auf der Profilschiene (1) und einem Sicherungsschenkel (36) zur Anlage am Anbauteil (100) ausgeführt ist.

10. Verfahren zum Befestigen eines Anbauteils (100) an einer Montageanordnung nach einem der vorstehenden Ansprüche, umfassend die Schritte:
- Einführen des Nutensteins (20) des Befestigungsteils (2) in die Profilschiene (1),
- Verschieben des Befestigungsteils (2) längs der Profilschiene (1),
- Verdrehen des Klemmkörpers (30) aus der Verschiebeposition in die Vormontageposition,
- Einbringen des Anbauteils (100) zwischen den Klemmkörper (30) und die Profilschiene (1), und
- Festlegen des Anbauteils (100) zwischen dem Klemmkörper (30) und der Profilschiene (1).
